# EUROPÄISCHE PATENTSCHRIFT

(11) **EP 2 343 222 B1**
(45) Veröffentlichungstag und Bekanntmachung des Hinweises auf die Patenterteilung: **20.06.2018**
(21) Anmeldenummer: 10178027.8
(22) Anmeldetag: 21.09.2010
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 13.07.2011
(73) Patentinhaber: Metalsa Automotive GmbH, 51702 Bergneustadt (DE)
(72) Erfinder: Beki, Gürkan, 51766 Engelskirchen (DE); Hellweg,Hans-Bernd, Dr., 53819 Neunkirch-Seelscheid (DE)
(74) Vertreter: Rebbereh, Cornelia

(56) Entgegenhaltungen:
- DE-A1-102007 061 064
- DE-U1-202006 003 649

## Beschreibung

Die Erfindung betrifft ein Überrollschutzsystem für Kraftfahrzeuge mit
- einer an einem Kraftfahrzeug anordbaren Führungseinheit,
- einem zwischen einer Lagerungsposition und einer Überschlagsposition verstellbar an der Führungseinheit gelagerten Überrollkörper und
- einer den Überrollkörper im Bedarfsfall aus der Lagerungsposition in die Überschlagsposition verstellenden pyrotechnischen Antriebseinheit.

Überrollschutzsysteme der eingangs genannten Art sind in vielfältigen Ausgestaltungen aus dem Stand der Technik bekannt. Sie dienen bei Kraftfahrzeugen ohne ein starres Dach, wie Cabriolets oder Roadstern, zum Schutz der Insassen im Falle eines Überschlags der Fahrzeuge. Gemeinsam mit dem Windschutzscheibenrahmen stellen dabei die Überrollkörper der Überrollschutzsysteme den Fahrzeuginsassen bei einem Überschlag einen Überlebensraum zur Verfügung.

Neben starr am Fahrzeug angeordneten Überrollbügeln, welche sich sowohl über die gesamte Fahrzeugbreite erstrecken, aber auch nur jeweils hinter einem Fahrzeugsitz angeordnet sein können, haben sich mittlerweise aktive Überrollschutzsysteme etabliert, bei denen der Überrollkörper im Normalzustand in einer von außen nicht sichtbaren Lagerungsposition angeordnet ist und erst im Bedarfsfall, nämlich bei einem drohenden Überschlag in die Überschlagposition verstellt wird.

Zur schlagartigen Verlagerung der Überrollkörper werden überwiegend vorgespannte Federsysteme eingesetzt, wobei die Federenergie nach Auflösung einer Verriegelung eine Verstellung in die Überschlagsposition bewirkt. Einen alternativen Antrieb stellen sogenannte pyrotechnische Antriebseinheiten dar, bei denen die sich mit Auslösung der pyrotechnischen Einheit, bspw. einem Gasgenerator ergebene schlagartige Druckerhöhung dazu genutzt wird, um den Überrollkörper in die Überschlagsposition zu überführen.

Aus der DE 20 2006 003 649 U1 ist ein Überrollschutzsystem für Kraftfahrzeuge bekannt, bei dem ein aktiv ausstellbarer Überrollbügel im hinteren, eine Sichtscheibe aufweisenden Fahrzeugbereich vorgesehen ist, der in einer fahrzeugfesten Halterung lageveränderlich aufgenommen ist. Das Überrollbügelsystem ist in einer eingefahrenen Normallage oft durch eine zur Innenausstattung passende Verkleidung verdeckt, die beim Aufstellen des Überrollbügels entweder mitgenommen oder weggeklappt wird. In einer anderen Ausgestaltungsform ist eine Heckscheibe aus Glas mit einer Rippe oder einer Nut zum Vorsehen einer Kerbwirkung versehen, wobei die Rippe oder die Nut im Kontaktbereich des Bügelkopfes des Überrollbügels und der Heckscheibe liegt. Die Heckscheibe wird beim Aufstellen des Überrollbügels zertrümmert.

Die DE 10 2007 061 064 A1 offenbart eine Überrollschutzeinrichtung für Kraftfahrzeuge mit einem abnehmbaren oder versenkbaren Dach, bei der ein Überrollkörper aus einer fixierten Ruhestellung durch eine in das Dach integrierte Scheibe in eine oberhalb der Scheibe liegende, feststehende Schutzstellung ausfahrbar ist. Es ist eine Vorrichtung aus einem Auswurfkanal und einem Brechkörper vorgesehen, bei der eine Aktivierung der Überrollschutzeinrichtung geschossartig gegen die Scheibe austreibbar ist.

Am Fahrzeug ist das eingebaute Überrollschutzsystem durch eine - bezogen auf die Einbaulage des Überrollschutzsystems am Kraftfahrzeug - oberhalb des Überrollkörpers angeordnete Abdeckung verdeckt, welche an die Fahrzeugkontur angepasst ist. Um die Sicherungsfunktion des Überrollschutzsystems zu gewährleisten, weist dabei die ein- oder mehrteilige Abdeckung eine üblicherweise durch eine Klappe oder Kappe verdeckte Durchtrittsöffnung auf, die im Gefahrenfall eine zuverlässige Verlagerung des Überrollkörpers aus der Lagerungsposition in die Überschlagsposition ermöglicht. Eine derartige Ausgestaltung weist jedoch den Nachteil auf, dass die Abdeckungen, insbesondere im Falle der Verwendung von Klappen einen erhöhten Fertigungs- und Montageaufwand aufweisen, was wiederum zu erhöhten Fertigungskosten führt.

Hiervon ausgehend liegt der Erfindung die Aufgabe zugrunde, ein Überrollschutzsystem mit einer den Überrollkörper abdeckenden einfacheren Abdeckung bereitzustellen, die eine zuverlässige Verlagerung des Überrollkörpers aus der Lagerungsposition in die Überschlagsposition gewährleistet.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass eine den Überrollkörper in der Einbaulage am Kraftfahrzeug überdeckende Abdeckung einen für die Verlagerung des Überrollkörpers durch die Abdeckung strukturschwachen Durchtrittsbereich aufweist.

Das erfindungsgemäße Überrollschutzsystem macht sich den Vorteil von pyrotechnisch Antriebseinheiten zunutze, wonach die derart angetriebenen Überrollkörper unmittelbar nach der Auslösung eine hohe kinetische Energie aufweisen, die ausreicht, um die entsprechend ausgestaltete Abdeckung an einem hierfür vorgesehenen Bereich, in dem sie von außen betrachtet eine durchgehenden Oberfläche aufweisen kann, zu durchstoßen. Erfindungsgemäß weist dabei die Abdeckung einen strukturschwachen Durchtrittsbereich auf, d. h., der Durchtrittsbereich ist gegenüber dem umgebenden Bereich zumindest partiell mit einer geringeren Festigkeit ausgestattet, so dass der angetriebene Überrollkörper die Abdeckung in diesem Bereich problemlos und ohne Verzögerung durchstößt. Die definiert strukturschwach ausgebildete Abdeckung gewährleistet dabei in zuverlässiger Weise, dass der Überrollkörper an einer vorgegebenen Stelle durch die Abdeckung hindurch tritt, so dass es nicht zu einer unvorhergesehenen Verlagerung der Abdeckung oder des Überrollkörpers infolge des Zusammenwirkens mit dem ausgelösten Überrollkörper kommt. Durch die Ausgestaltung der Abdeckung, insbesondere des strukturschwachen Durchtrittsbereich kann in besonders zuverlässiger Weise der Bewegungsablauf des Überrollkörpers aus der Lagerungsposition in die Überschlagsposition festgelegt werden.

Ein besonderer Vorteil in der erfindungsgemäßen Ausgestaltung besteht darin, dass die Abdeckung einteilig hergestellt werden kann, was gegenüber mehrteiligen Abdeckungen mit Klappen oder Kappen zu einem erheblichen Kostenvorteil fuhrt. Die Abdeckung kann ohne Unterbrechungen ausgebildet sein und eine beliebige, vorzugsweise durchgehend einheitliche Oberfläche aufweisen. Gegenüber einer Verwendung von mehrteiligen Abdeckungen werden die sich dadurch ergebenden Nachteile, wie bspw. Farbunterschiede zwischen der Klappe oder Kappe und der diese umgebenden Abdeckung sowie sich ggf. einstellende Klappergeräusche besonders wirksam vermieden.

Die Ausgestaltung des Durchtrittsbereichs derart, dass dieser strukturschwach ausgebildet ist, ist grundsätzlich frei wählbar. So kann das Material der Abdeckung, üblicherweise ein Kunststoff, bspw. im Durchtrittsbereich einen Steifigkeitsunterschied aufweisen oder die Abdeckung ist im Durchtrittsbereich durch ein von der übrigen Abdeckung abweichendes Kunststoffmaterial hergestellt. Die Abdeckung weist jedoch im Durchtrittsbereich mindestens eine Sollbruchstelle auf. Die Anordnung der Sollbruchstelle erfolgt dabei derart, dass die Abdeckung im Zusammenwirken mit dem sich aufstellenden Überrollkörper in vorgegebener Weise eine Öffnung für den Durchtritt des Überrollkörpers freigibt- Die Sollbruchstelle bestimmt somit das Verhalten der Abdeckung im Kontakt mit dem Überrollkörper.

Die Sollbruchstelle lässt sich sowohl nach der Herstellung der Abdeckung, bspw. durch geeignete spanabhebende Bearbeitungsverfahren oder bereits während des Herstellungsprozesses, bspw. durch die Ausgestaltung einer entsprechenden Form im Falle der Ausbildung der Abdeckung aus einem Kunststoffteil, herstellen, wobei diese an einer von außen nicht sichtbaren Unterseite der Abdeckung angeordnet ist. Besonders vorteilhaftenveise weist die Abdeckung im Bereich der Sollbruchstelle dabei eine gegenüber dem sie umgebenden Bereich geringere Materialstärke auf, was sich sowohl durch spanabhebende Fertigungsverfahren wie auch durch geeignete Kunststoffformgebungsverfahren besonders einfach und kostengünstig realisieren lässt. So besteht bspw. die Möglichkeit, die Abdeckung im gesamten Durchtrittsbereich in einer geringeren Dicke auszubilden, um ein zuverlässiges Durchstoßen des Überrollkörpers zu gewährleisten.
Nach einer besonders vorteilhaften Ausgestaltung der Erfindung ist die Sollbruchstelle jedoch durch eine in die Abdeckung eingebrachte Nut gebildet. Diese gibt in besonders zuverlässiger Weise das Zerstörungsverhalten der Abdeckung im Zusammenwirken mit dem Überrollkörper vor und lässt sich besonders kostengünstig herstellen. Die Ausrichtung sowie die Anzahl der erforderlichen Nuten richtet sich dabei nach dem verwendeten Überrollkörper sowie der eingesetzten pyrotechnischen Antriebseinheit, aus welcher sich die für den Durchtritt durch die Abdeckung zur Verfügung stehende Energie ergibt.
Die Anordnung des Überrollkörpers relativ zu der den Überrollkörper überdeckenden Abdeckung ist grundsätzlich frei wählbar. Zur Minimierung des für das Überrollschutzsystem erforderlichen Bauraums ist nach einer Weiterbildung der Erfindung jedoch vorgesehen, dass der Überrollkörper in der Lagerungsposition unmittelbar an die Abdeckung angrenzt, bevorzugt mit dieser in Kontakt befindlich ist. Das erfindungsgemäße Überrollschutzsystem macht sich den Vorteil, der sich aus der Verwendung einer pyrotechnischen Antriebseinheit ergibt, zunutze, dass unmittelbar nach der Auslösung des pyrotechnischen Antriebs eine ausreichende kinetische Energie zur Verfügung steht, die es ermöglicht, den Überrollkörper unmittelbar an die Abdeckung angrenzend anzuordnen. Im Gegensatz zu mechanisch wirkenden Antriebseinheiten, bspw. vorgespannten Federelemente, bei denen aufgrund der Trägheit derartige Systeme zum Aufbau der notwendigen kinetischen Energie die Einhaltung von Abständen zwischen dem Überrollkörper und der Abdeckung erforderlich ist, kann beim erfindungsgemäßen System auf derartige Abstände verzichtet werden, so dass aufgrund des reduzieren Bauraums für das Überrollschutzsystem am Fahrzeug ein erhöhter nutzbarer Bauraum verbleibt. Der Überrollkörper ist dabei vorzugsweise in der Lagerungsposition in Kontakt mit der Abdeckung befindlich. Bei einer im Abstand voneinander angeordneten Anordnung ist diese in einem Abstand von weniger als 10 mm, bevorzugt weniger als 5 mm, besonders bevorzugt weniger als 2 mm, ausgebildet. Nach einer weiteren Ausgestaltung der Erfindung ist an der der Abdeckung zugewandten Fläche an dem Überrollkörper und/oder an der Abdeckung im Durchtrittsbereich ein Dämpfungselement angeordnet. Das Dämpfungselement verhindert in besonders zuverlässiger Weise, dass es im Fahrbetrieb des Fahrzeugs zu einer Geräuschbelästigung, wie bspw. Klappergeräuschen aufgrund von Relativbewegungen der Abdeckung gegenüber dem Überrollkörper kommt. Die Ausgestaltung des Dämpfungselements sowie dessen Anordnung an der Abdeckung und/oder dem Überrollkörper kann dabei in beliebiger Weise erfolgen, wobei eine Klebung des Dämpfungselements eine besonders einfache und kostengünstige Anordnung darstellt.
Nach einer weiteren Ausgestaltung der Erfindung ist die Abdeckung zur formschlüssigen Verbindung mit dem Überrollkörper ausgebildet. Auch diese Ausgestaltung, wonach die Abdeckung an ihrem dem Überrollkörper zugewandten Bereich derart ausgebildet ist, dass sie eine bspw. klemmende Anordnung des Überrollkörpers ermöglicht, verhindert in besonders zuverlässiger Weise das Auftreten von Geräuschen aufgrund von Relativbewegungen des Überrollkörpers gegenüber der Abdeckung. Verbindungsmittel können dabei bspw. durch Kunststoffbügel oder dergleichen gebildet sein, die vorzugsweise einstückig mit der Abdeckung ausgebildet sind.
Die Ausgestaltung der pyrotechnischen Antriebseinheit zur Verstellung des Überrollkörpers aus der Lagerungsposition in die Überschlagsposition ist grundsätzlich freiwählbar. Nach einer besonders vorteilhaften Ausgestaltung der Erfindung weist die pyrotechnische Antriebseinheit jedoch einen Gasgenerator auf, der in einem mit dem Überrollkörper gebildeten Arbeitsraum derart angeordnet ist, dass eine infolge der Auslösung des Gasgenerators erfolgende Druckerhöhung im Arbeitsraum eine Verlagerung des Überrollkörpers aus der Lagerungsposition durch die Abdeckung in die Überschlagsposition bewirkt.
Gemäß dieser Ausgestaltung der Erfindung bewirkt die sich in dem Arbeitsraum einstellende Druckerhöhung, wobei unter einem abgegrenzten Arbeitsraum im Rahmen der Erfindung ein zumindest während der Auslösung des Gasgenerators im Wesentlichen gasdicht ausgebildeter Raum verstanden wird, der u. a. durch Abschnitte des Überrollkörpers gebildet ist, unmittelbar eine Verstellung des Überrollkörpers aus der Lagerungsposition in die det ist, unmittelbar eine Verstellung des Überrollkörpers aus der Lagerungsposition in die Überschlagsposition. Gemäß dieser Ausgestaltung der Erfindung kann auf weitere Bauelemente zur Bereitstellung der erforderlichen Antriebsenergie weitestgehend verzichtet werden, da der Arbeitsraum bereits durch den Überrollkörper weitestgehend abgegrenzt ist. Der Arbeitsraum kann dabei an beliebiger Stelle, vorzugsweise innerhalb des Überrollkörpers gebildet sein, wobei neben einer Anordnung im Bereich des oberen Endes auch eine Anordnung im Bereich eines unteren Endes des Überrollkörpers eine kostengünstige Herstellung des Überrollschutzsystems ermöglicht.

Ein Ausführungsbeispiel der Erfindung wird nachstehend mit Bezug auf die Zeichnungen näher erläutert. In den Zeichnungen zeigen:
- Fig. 1: eine perspektivische Ansicht einer Ausführungsform eines Überrollschutzsystems und

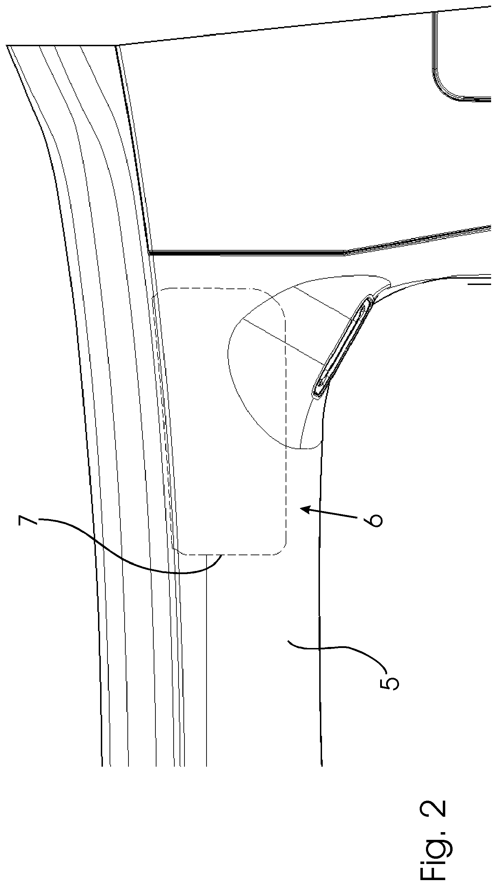

- Fig. 2: eine Draufsicht auf eine Abdeckung des Überrollschutzsystems von Fig. 1.

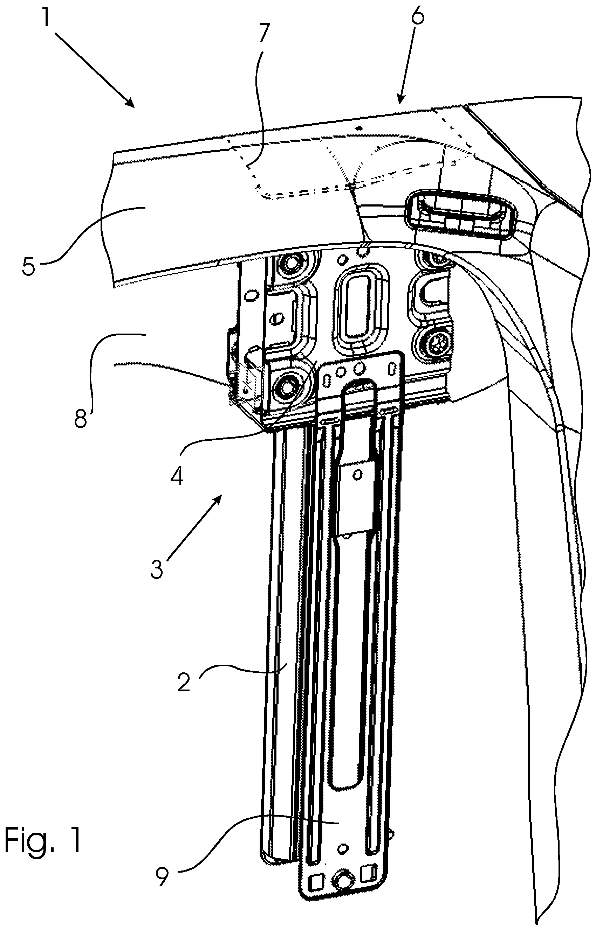

Eine Ausführungsform eines erfindungsgemäßen Überrollschutzsystems 1 ist in Fig. 1 mit einer partiell wiedergegebenen Abdeckung 5 dargestellt. Das Überrollschutzsystem 1 weist einen Überrollkörper 2 auf, der gegenüber einer als Kassette 4 ausgebildeten Führungseinheit zwischen der in Fig. 1 dargestellten Lagerungsposition und einer hier nicht dargestellten Überschlagsposition verstellbar ist.

Der über die Kassette 4, welche an einem fahrzeugfesten Träger 8 angeordnet ist, an dem Fahrzeug angeordnete Überrollkörper 2 lässt sich zwischen der in Fig. 1 dargestellten Lagerungsposition und einer hier nicht dargestellten Überschlagsposition verstellen. Hierzu dient ein pyrotechnischer Antrieb, welcher innerhalb des als Hohlkörper ausgebildeten Überrollkörpers 2 angeordnet ist.

Der Überrollkörper 2 bildet dabei gemeinsam mit einer einen Gasgenerator aufweisenden Grundplatte einen abgegrenzten Arbeitsraum. Eine Auslösung des Gasgenerators mit einer sich dabei einstellenden Druckerhöhung im Arbeitsraum bewirkt eine Verstellung des Überrollkörpers 2 aus der unteren Lagerungsposition in die Überschlagsposition, wobei sich der Überrollkörper 2 - bezogen auf die zeichnerische Darstellung - nach oben durch die Abdeckung 5 bewegt.

Um eine zuverlässige Verlagerung des Überrollkörpers 2 zu erreichen, weist die Abdeckung 5 im Durchtrittsbereich 6 des Überrollkörpers 2 eine Sollbruchstelle 7 in Form einer gelaserten Nut auf, durch die die Abdeckung im Durchtrittsbereich 6 eine Strukturschwächung aufweist. Der angetriebene Überrollkörper 2 weist eine ausreichend hohe kinetische Energie auf, um die Abdeckung 5 im Bereich der Durchtrittsöffnung 6 unter Aufbrechen der Sollbruchstellen 7 zu durchstoßen.

Aufgrund der Verwendung eines pyrotechnischen Antriebs in Form eines Gasgenerators erfolgt die Anordnung des Überrollkörpers 2 in der Lagerungsposition derart, dass der Überrollkörper 2 mit seiner der Abdeckung 5 zugewandten Oberkante an einer Unterseite der Abdeckung 5 im Bereich des Durchtrittsbereichs 6 anliegt.

## Patentansprüche

1. Überrollschutzsystem für Kraftfahrzeuge, wie Cabriolets oder Roadster, mit
- einer an einem Kraftfahrzeug anordbaren Führungseinheit (4),
- einem zwischen einer Lagerungsposition und einer Überschlagsposition verstellbar an der Führungseinheit (4) gelagerten Überrollkörper (2) und
- einer den Überrollkörper (2) im Bedarfsfall aus der Lagerungsposition in die Überschlagsposition verstellenden pyrotechnischen Antriebseinheit,
- einer den Überrollkörper (2) in der Einbaulage am Kraftfahrzeug überdeckenden Abdeckung (5) mit einem für die Verlagerung des Überrollkörpers (2) durch die Abdeckung (5) strukturschwachen Durchtrittsbereich (6),
**dadurch gekennzeichnet, dass** die Abdeckung (5) im Durchtrittsbereich (6) aus einem Kunststoffteil ausgebildet ist und mindestens eine Sollbruchstelle (7) aufweist, die an einer von außen nicht sichtbaren Unterseite der Abdeckung (5) angeordnet ist, wobei der Uberrollkörper (2) in der Lagerungsposition in einem Abstand von weniger als 10 mm von der Abdeckung (5) angeordnet ist.

2. Überrollschutzsystem nach Anspruch 1, **dadurch gekennzeichnet, dass** die Abdeckung (5) im Bereich der Sollbruchstelle (7) eine gegenüber dem sie umgebenden Bereich geringere Materialstärke aufweist.

3. Überrollschutzsystem nach einem der vorhergehenden Ansprüche, **dadurch gekennzeichnet, dass** die Sollbruchstelle durch eine in die Abdeckung eingebrachte Nut (7) gebildet ist.

4. Überrollschutzsystem nach einem der vorhergehenden Ansprüche, **dadurch gekennzeichnet, dass** der Überrollkörper (2) in der Lagerungsposition unmittelbar an die Abdeckung (5) angrenzend angeordnet ist, bevorzugt mit dieser in Kontakt befindlich ist.

5. Überrollschutzsystem nach einem der vorhergehenden Ansprüche, **gekennzeichnet durch** ein an der Abdeckung (5) zugewandten Fläche an dem Überrollkörper (2) und/oder an der Abdeckung (5) im Durchtrittsbereich (6) angeordnetes Dämpfungselement.

6. Überrollschutzsystem nach einem der vorhergehenden Ansprüche, **dadurch gekennzeichnet, dass** die Abdeckung (5) zur formschlüssigen Verbindung mit dem Überrollkörper (2) ausgebildet ist.

7. Überrollschutzsystem nach einem der vorhergehenden Ansprüche, **dadurch gekennzeichnet, dass** die pyrotechnische Antriebseinheit einen Gasgenerator aufweist, der in einem mit dem Überrollkörper (2) gebildeten Arbeitsraum derart angeordnet ist, dass ein infolge der Auslösung des Gasgenerators erfolgenden Druckerhöhung im Arbeitsraum eine Verlagerung des Überrollkörpers (2) aus der Lagerungsposition durch die Abdeckung (5) in die Überschlagsposition bewirkt.

## Claims

1. Rollover protection system for motor vehicles, such as convertibles or roadsters, comprising
- a guide unit (4) which can be arranged on a motor vehicle,
- a rollover body (2) mounted adjustably on the guide unit (4) between a storage position and a rollover position, and
- a pyrotechnic drive unit which adjusts the rollover body (2), as required, from the storage position to the rollover position,
- a cover (5) covering the rollover body (2) in the installed position on the motor vehicle and having a structurally weak passage region (6) for the displacement of the rollover body (2) through the cover (5),
**characterised in that** the cover (5) in the passage region (6) is formed from a plastic part and has at least one predetermined breaking point (7) which is arranged on an underside of the cover (5) not visible from outside, the rollover body (2) in the storage position being arranged at a distance of less than 10 mm from the cover (5).

2. Rollover protection system according to Claim 1, **characterised in that** the cover (5) in the region of the predetermined breaking point (7) has a material thickness less than that of the surrounding region.

3. Rollover protection system according to one of the preceding claims, **characterised in that** the predetermined breaking point is formed by a groove (7) made in the cover.

4. Rollover protection system according to one of the preceding claims, **characterised in that** the rollover body (2) in the storage position is arranged directly adjoining the cover (5), preferably is in contact therewith.

5. Rollover protection system according to one of the preceding claims, **characterised by** a damping element arranged on the surface facing the cover (5) on the rollover body (2) and/or a damping element arranged on the cover (5) in the passage region (6).

6. Rollover protection system according to one of the preceding claims, **characterised in that** the cover (5) is formed for form-fitting connection with the rollover body (2).

7. Rollover protection system according to one of the preceding claims, **characterised in that** the pyrotechnic drive unit has a gas generator which is arranged in a working space, formed with the rollover body (2), in such a manner that a pressure increase in the working space as a result of the triggering of the gas generator causes a displacement of the rollover body (2) from the storage position through the cover (5) into the rollover position.

## Revendications

1. Système de protection contre les tonneaux pour des véhicules automobiles, tels que des cabriolets ou roadsters, avec
- une unité de guidage (4) pouvant être disposée au niveau d'un véhicule automobile,
- un corps anti-retournement (2) logé de manière déplaçable entre une position de stockage et une position de capotage au niveau de l'unité de guidage (4) et
- une unité d'entraînement pyrotechnique déplaçant le corps anti-retournement (2) en cas de besoin de la position de stockage à la position de capotage,
- un recouvrement (5) recouvrant le corps anti-retournement (2) dans la position d'installation au niveau du véhicule automobile avec une zone de passage (6) à structure faible pour le déplacement du corps anti-retournement (2) par le recouvrement (5),
**caractérisé en ce que** le recouvrement (5) est réalisé dans la zone de passage (6) en une partie en matière plastique et présente au moins un point de rupture (7) qui est disposé au niveau d'un côté inférieur non visible de l'extérieur du recouvrement (5), dans lequel le corps anti-retournement (2) est disposé dans la position de stockage à une distance de moins de 10 mm du recouvrement (5).

2. Système de protection contre les tonneaux selon la revendication 1, **caractérisé en ce que** le recouvrement (5) présente dans la zone du point de rupture (7) une épaisseur de matériau plus faible par rapport à la zone l'entourant.

3. Système de protection contre les tonneaux selon l'une quelconque des revendications précédentes, **caractérisé en ce que** le point de rupture est formé par une rainure (7) introduite dans le recouvrement.

4. Système de protection contre les tonneaux selon l'une quelconque des revendications précédentes, **caractérisé en ce que** le corps anti-retournement (2) est disposé dans la position de stockage de manière directement contiguë au recouvrement (5), est de préférence en contact avec celui-ci.

5. Système de protection contre les tonneaux selon l'une quelconque des revendications précédentes, **caractérisé par** un élément d'amortissement disposé au niveau de la surface tournée vers le recouvrement (5) au niveau du corps anti-retournement (2) et/ou au niveau du recouvrement (5) dans la zone de passage (6).

6. Système de protection contre les tonneaux selon l'une quelconque des revendications précédentes, **caractérisé en ce que** le recouvrement (5) est réalisé pour la liaison par complémentarité de formes avec le corps anti-retournement (2).

7. Système de protection contre les tonneaux selon l'une quelconque des revendications précédentes, **caractérisé en ce que** l'unité d'entraînement pyrotechnique présente un générateur de gaz qui est disposé dans un espace de travail formé avec le corps anti-retournement (2) de telle manière qu'une augmentation de pression s'effectuant à la suite du déclenchement du générateur de gaz dans l'espace de travail provoque un déplacement du corps anti-retournement (2) de la position de stockage par le recouvrement (5) dans la position de capotage.
